# EUROPEAN PATENT APPLICATION

(11) **EP 4 603 252 A1**
(43) Date of publication of application: **20.08.2025**
(21) Application number: 25156442.3
(22) Date of filing: 07.02.2025
(51) Int. Cl.: B29B 17/00, B29B 17/02, B29B 17/04, B29L 31/00

(54) **METHOD FOR PRODUCING A CARTON PACKAGE SLEEVE FROM A USED CARTON PACKAGE AND APPARATUS FOR PRODUCING A CARTON PACKAGE SLEEVE FROM A USED CARTON PACKAGE**

(30) Priority: 14.02.2024 IT 202400003079
(71) Applicant: Tetra Laval Holdings & Finance S.A., 1009 Pully (CH)
(72) Inventor: BAST, Tim, 41123 Modena (IT)
(74) Representative: Tetra Pak Patent Attorneys

(57) **Abstract**

A method for producing a carton packaging sleeve (8) from a used carton package (1), whereby the used carton package (1) has: a top wall (2), a bottom wall (3), and a side wall (4), a longitudinal seal (5C), a first transversal seal (5A), a second transversal seal (5B), an opening, optionally a spout (6) associated with the opening; wherein the method comprises the steps of: detecting the presence of the optional spout (6) and removing the optional spout (6) in case its presence has been detected; opening the first transversal seal (5A) and the second transversal seal (5B) to obtain the sleeve (8).

## Description

### TECHNICAL FIELD

The present invention relates to a method for producing a carton package sleeve from a used carton package. Also, the present invention relates to an apparatus for producing a carton package sleeve from a used carton package.

### BACKGROUND ART

Many liquid or pourable food products, such as fruit juice, UHT (ultra-high-temperature treated) milk, milk substitutes such as oat and soy drinks, wine, tomato sauce, yoghurt, edible oils, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminium foil, which is superimposed on a layer of heat-seal plastic material and is in turn covered with another layer of heat-seal plastic material forming the inner face of the package eventually contacting the food product.

Packages of this sort are normally produced on fully automatic packaging apparatuses, which form the packages from respective packaging blanks. These packaging blanks can be provided in the form of single packaging blanks or in form of a continuous web, which is formed from a plurality of successively arranged packaging blanks.

In the case of the packaging apparatus being designed to form the packages from a continuous web, the packaging apparatus advances and sterilizes the web, which is then formed into a tube and filled with the pourable product before the tube is formed into individual sealed packages.

To facilitate the formation and for defining the shape of the packages, the packaging blanks are provided with a plurality of crease lines. The crease lines may define the desired specific shapes of the packages.

It is known to produce packages having a bottom wall and a top wall being spaced apart from one another along a longitudinal axis of the packages, and a plurality of side walls interposed between the top wall and the bottom wall.

Usually, once these packages have been used, they undergo separate collection and waste disposal, such that the various layers forming the multilayer structure of the packaging material are separated and recycled.

It has been suggested to consumers to cut open individual cartons at the top and the bottom as well as along the longitudinal seal, to flatten them, to rinse them, and finally to return them in their completely flattened configuration for recycling while keeping the while-lined and silver-lines cartons separate, see for example
- https://www.plasticfreeseas.org/wp-content/uploads/2020/11/liquid-carton-instructions orange-51 0 revised.jpg or
- https://www.youtube.com/watch?v=5WJ8QZX6JeA
- https://www.upperhutt.govt.nz/News/Tetra-Pak%AE-type-packaging-recycling

A need is felt to render carton packages reusable such that recycling can be avoided and the carbon footprint of the packages is reduced.

### DISCLOSURE OF INVENTION

It is therefore an aim of the present invention to provide a method and an apparatus for producing a carton packaging sleeve from a used carton package which overcomes at least one of the a forementioned drawbacks.

This aim is fully achieved by the method according to one or more of the appended claims.

### BRIEF DESCRIPTION OF THE DRAWINGS

A non-limiting embodiment of the present invention will be described by way of example with reference to the accompanying drawings, in which:

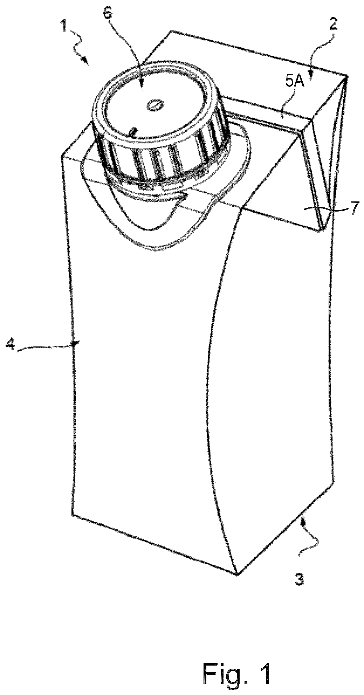

Figure 1 is a schematic view of a used carton package which is processed by the method according to the present invention;

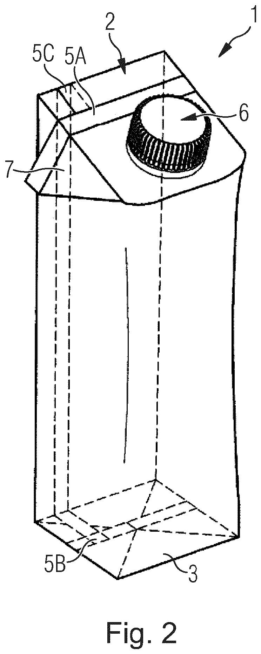

Figure 2 is a schematic view of a different type of used carton package which is processed by the method according to the present invention;

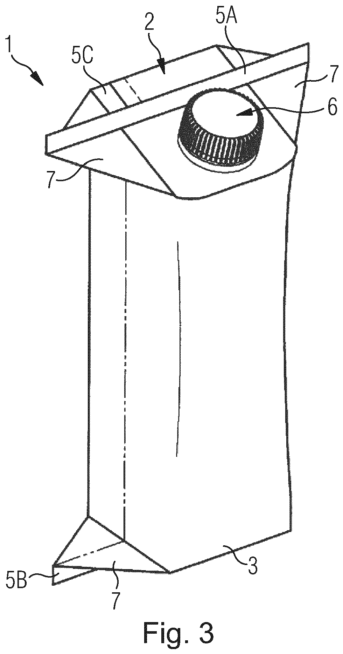

Figure 3 is a schematic view of the package of Figure 2, with the flaps folded back;

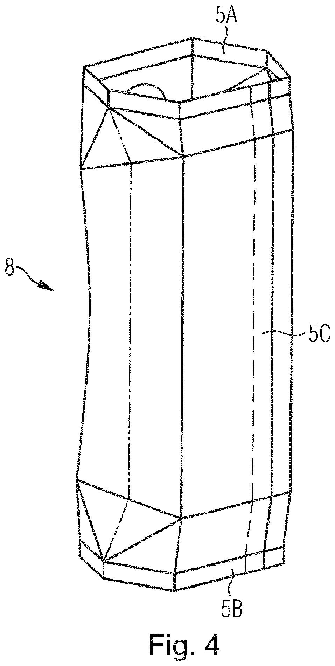

Figure 4 is a schematic view of a sleeve obtained from used carton package of figure 2;

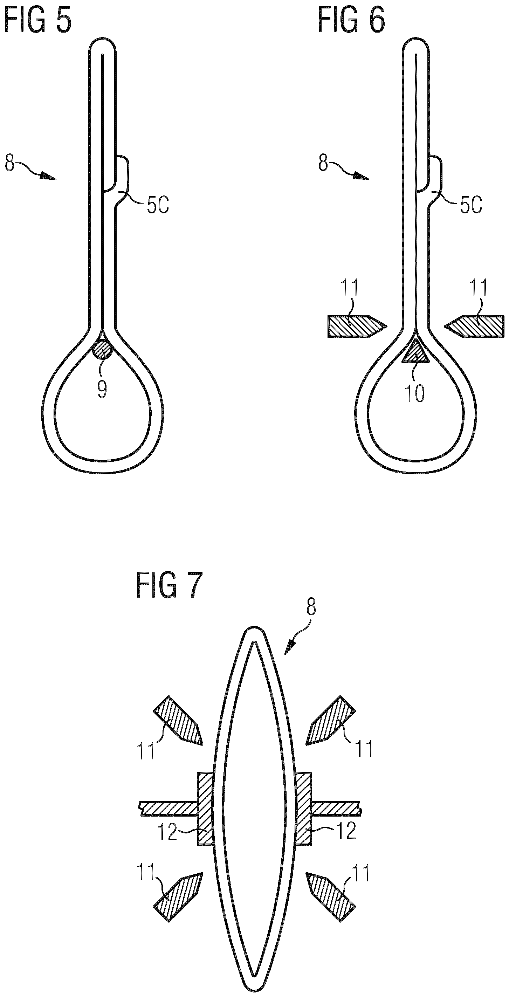

Figure 5 is a schematic view of insertion of a heated pin between the sealed surfaces forming the first transversal seal and the second transversal seal;
Figure 6 is a schematic view of insertion of a mechanical device between the sealed surfaces forming the first transversal seal and the second transversal seal;
Figure 7 is a schematic view of gripping the sealed surfaces forming the first transversal seal and the second transversal seal through suction grippers;

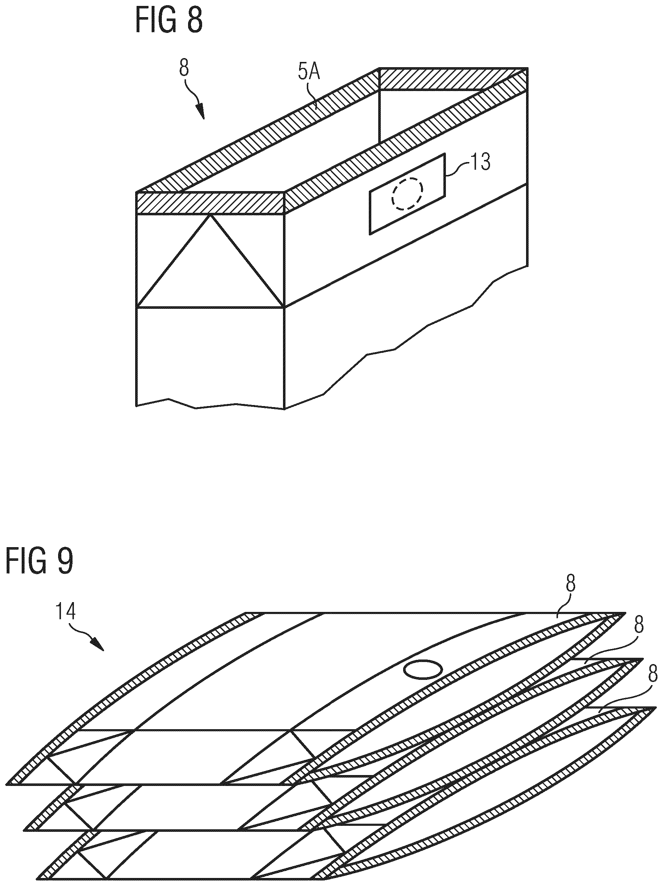

Figure 8 is a schematic view of a patch applied on a pour opening of a sleeve;
Figure 9 is a schematic view of a stack of sleeves.

### DETAILED DESCRIPTION OF THE INVENTION

The present invention relates to a method for producing a carton package sleeve from a used carton package.

The term "carton package" refers to a package generally made from a laminate packaging material which comprises a paper, paperboard, or cardboard layer as structural backbone. The packaging material may further comprise a barrier layer for providing barrier properties for example against moisture, oxygen, and light, preserving its content, and extending the content's shelf life. The barrier layer may comprise an aluminium foil, a polymer substrate (such as a polyolefin or polyamide) or a fibre-based substrate, all of which may be coated with one or more additional functional layers to improve the barrier properties. The laminate packaging material may further comprise heat-sealable layers on its inner and outer surfaces to allow the creation of seals in areas where the laminate material overlaps when erecting a carton package.

A carton package may comprise a top panel, a bottom panel, a front panel, a back panel, and left and right panels. Some or all panels may be connected by edges which may be formed by folding the packaging material. Such folding may be supported by creating crease lines in packaging prior to folding. The panels resulting from folding are connected along certain edges, such as front-top edge and front-bottom. To create a sealed package from an initially flat packaging material, some seals may be created in areas where the packaging overlaps. The sealed carton package may comprise a longitudinal seal running along the body from the bottom panel to the top panel as well as two transversal seals running across the bottom and the top panel. Alternatively, the carton package may comprise two longitudinal seals running along the body and one transversal seal, preferably running across the bottom panel.

The term "carton package sleeve" refers to a piece of laminate packaging material which is designed and folded into a three-dimensional shape. The carton package sleeve typically has a three-dimensional configuration which may be obtainable by forming the three-dimensional shape by folding the initially flat packaging material such that the packaging material overlaps along at least one edge and then sealing the packaging along the overlapping edge. Alternatively, the carton package sleeve having the three-dimensional shape may be obtainable from a fully sealed package by opening at least one seal, preferably two seals such as the two transversal seals. It typically includes sections corresponding to the various panels of the final carton package, such as the front, back, left, right, top, and bottom panels. These sections maybe delineated by crease lines that facilitate accurate and easy folding.

In contrast to the sealed carton package, the carton package sleeve has at least one panel or edge that is open and allows access to the inside of the carton package. Preferably, the carton package sleeve has at least two open panels or edges which allow to access the inside of the carton package. Preferably, the carton package sleeve is free of overlapping areas and folds except for those overlapping seals, more preferably the one overlapping seal line, that defines and maintains the three-dimension shape of the sleeve.

The carton package sleeve may further have a flat configuration. The three-dimensional configuration is transformed into a flat configuration in which, except for the overlap areas, two sections of the laminate packaging material are brought into adjacency with each other. Preferably, the seal or seals necessary for defining and maintaining the three-dimension shape of the sleeve are not opened during the transformation from the three-dimensional to the flat configuration of the carton package sleeve.

The term "used carton package" refers to a carton package that has already been through its initial lifecycle of use. This may include being completely sealed and utilized for storing and distributing content, such as liquid consumables. After the contents have been consumed or removed, the package becomes a used carton package. Such packages may show signs of use, like opening marks, and may have residual content or aroma from the stored material.

A used carton package suitable for the method according to the present invention generally comprises certain sections and features integral to its design. It may include a top section and a bottom section, with a body section situated between them, forming the main structure. A longitudinal seal may be present along the body section, ensuring the integrity of the package. Additionally, the package has a first transversal seal across the top section and a second transversal seal across the bottom section, contributing to its fully sealed nature. An opening may be incorporated into one of these sections - top, bottom, or body - allowing access to the interior volume of the package. Optionally, a spout can be associated with this opening, facilitating the drinking, dispensing, or removal of the package's contents. The optional spout may be attached to any panel of the carton package by attaching a flange of the spout to either the inside or the outside of the carton package, such as by adhesive attachment.

The method for producing a carton packaging sleeve from a used carton package according to the present invention may comprise the step of detecting the presence of the optional spout and removing the optional spout in case its presence has been detected.

The method may include an initial detection step to ascertain the presence of an optional spout on the used carton package. This detection can be carried out using various technologies, such as visual inspection systems, sensors, or a combination of both. The detections is preferably aimed at accurately identifying the spout's location and characteristics. Detecting the presence of an optional spout on a used carton package can be accomplished through various methods, each focusing on identifying unique characteristics of the spout. One common approach is using a visual inspection system, which involves cameras or scanners that capture images of the carton package. These images are then analyzed using image processing algorithms to identify the spout based on its shape, and/or size, and/or specific features. Another method involves employing sensors, such as capacitive, inductive, or ultrasonic sensors, which can detect variations in material properties or thickness where the spout is located. These sensors provide signals indicating the presence of a spout based on changes in electrical or acoustic properties compared to the rest of the carton material. The detection system can also be a combination of visual and sensor-based approaches, enhancing accuracy and reliability in identifying the presence of a spout. The choice of detection method may depend on factors like the optional spout's material, size, and the overall design of the carton package.

Upon confirmation of the spout's presence, the next step is its removal. Removing the optional spout from a used carton package may involve a mechanical process once its presence is detected. This can be achieved using a cutting or punching mechanism (specifically designed for this purpose). The mechanism typically includes sharp blades or dies configured to target the spout area precisely. The removal process may be carefully controlled to ensure the spout is cleanly separated from the carton without damaging the remaining material, which is crucial for the subsequent steps in producing the carton packaging sleeve. This removal process is typically integrated into an automated production line to handle high volumes efficiently. An alternative method for removing the optional spout from a used carton package involves undoing the adhesive or polymeric attachment that secures the spout to the package. This process can be achieved through the application of a solvent and/or heat treatment that weakens or dissolves the adhesive bond. The solvent or heat application must be precisely controlled to affect only the spout area, avoiding damage to the rest of the laminate packaging material. Once the adhesive bond is sufficiently weakened, mechanical means such as a robotic arm or a specially designed tool can gently remove the spout from the package. One advantage of this method is that the least amount of packaging material is damaged or removed from the carton package, thereby reducing the effort to prepare the used package for reuse.

The method for producing a carton packaging sleeve from a used carton package according to the present disclosure comprises the step of opening the first transversal seal and/or the second transversal seal to obtain a sleeve. This step may involve carefully cutting or mechanically separating this seal or these seals to open the seal lines. The cutting mechanism can be a blade or a laser. The cutting mechanism is precisely controlled to target only the seal areas without damaging the rest of the carton material. The aim is to allow the unfolding the carton package into a sleeve in a controlled fashion. The opened seal or seals allow the carton to be laid out flat, creating the basis for the sleeve.

Alternatively, opening the first transversal seal and/or the second transversal seal can also be achieved thermally. This involves applying heat to the polymers or adhesives that form the seal. The heat application is carefully controlled to specifically target the seal area, weakening the polymer bond without affecting the structural integrity of the rest of the laminate packaging material. Once the bond is sufficiently weakened, the seal can be easily opened, allowing the carton to be unfolded into a flat sleeve. This thermal approach provides a precise and efficient method for opening the seals and preparing the carton for conversion into a sleeve. Apparatus suitable for applying heat for thermal separation includes hot air guns, and/or infrared heaters, and/or induction heating systems. Hot air guns direct a stream of heated air onto the seal area, precisely melting the adhesive without damaging surrounding materials. Infrared heaters emit infrared radiation to heat the seal area directly, offering fast and uniform heating. Induction heating systems use electromagnetic fields to heat metallic elements in the seal or close to the sealed surfaces, if present, providing rapid and localized heating. Each apparatus offers different advantages in terms of precision, efficiency, and suitability for specific materials and seal types.

The combination of thermal and mechanical separation can be employed for opening the first transversal seal and/or the second transversal seal. Initially, heat is applied to the seal area to weaken the polymer or adhesive bond. This thermal weakening makes the seal more susceptible to mechanical separation. Following the heat application, a mechanical device, such as a blade or a robotic arm, gently separates the weakened seal. This combined approach ensures a controlled and efficient opening of the seal, allowing for precise unfolding of the carton into a flat sleeve without damaging the material.

The method for producing a carton packaging sleeve from a used carton package according to the present disclosure may comprise the step of folding the sleeve into a flat configuration. Folding the sleeve into a flat configuration may involve collapsing the carton along pre-existing creases or new creases prior to or during the step of folding the sleeve into a flat configuration. This step may be achieved through a series of mechanical devices or manual manipulation that ensures the sleeve is accurately and uniformly folded. The process may involve aligning the edges and panels of the sleeve and applying pressure along some of the folds to ensure a crisp, flat finish. This action not only conserves space but also prepares the sleeve for efficient storage, transport, or further processing steps, maintaining the integrity and uniformity of the sleeves.

The method for producing a carton packaging sleeve from a used carton package according to the present disclosure comprises the step of adding the sleeve to a stack of other sleeves. Adding the sleeve to a stack of other sleeves may involve an automated or manual process where the flat-configured sleeve is carefully placed on top of or alongside previously flattened sleeves. This step can generally be facilitated by a conveyor system or robotic arms that ensure precise placement and alignment of each sleeve in the stack. The stacking process is designed to maintain the flatness and integrity of each sleeve, optimizing space efficiency for storage or further processing. This step ensures that the sleeves are neatly organized, preventing damage, and facilitating easy handling or transportation.

In the method according to the present disclosure, the first transversal seal and/or the second transverse seal of a used carton package, each generally characterized by their sealed surfaces initially bonded together, undergo a detailed process for opening. This may involve applying heat, preferably in a careful and controlled fashion, directly to these seals to weaken the adhesive or polymeric bond that holds the sealed surfaces together. The careful and controlled application of heat to the first transversal seal and/or the second transverse seal may involve using precise temperature control and timing to ensure the heat is applied uniformly across the seal area while minimizing the exposure of other parts of the package to undue heat. This could be achieved through a controlled hot air system, infrared heating, or induction heating, depending on the material properties of the seal. The careful and controlled application of heat involves using precision heating equipment that targets the seal areas without impacting the surrounding carton material. The temperature is set to a level that softens or melts the adhesive without damaging the carton material. The duration of heat application is closely monitored to avoid any degradation to the carton material, optimizing the process for efficient separation of the sealed surfaces while maintaining the structural integrity of the sleeve. The heating process is monitored to ensure even application, preventing overheating, and ensuring the integrity of the sleeve.

Following the application of heat, a mechanical action may be employed to spatially separate the previously sealed surfaces of the first and/or second transverse seal. This careful application of heat, followed by mechanical separation, ensures the integrity of the sleeve while effectively opening the seals. The mechanical separation may involve using devices like robotic arms equipped with suction cups or grippers that gently pull the softened seal apart. The apparatus is designed to apply just enough force to separate the seal without tearing or damaging the carton material. Precision control systems guide the separation process, ensuring that the opening is clean and the sleeve remains intact for further processing.

Moreover, the separation of the seal may be executed by a mechanical device, which is inserted between the sealed surfaces. This device may be heated to assist in the separation process by further softening the adhesive or polymeric bond, making it easier to mechanically separate the sealed surfaces without causing damage to the carton material. The use of a heated mechanical device combines thermal and mechanical actions for efficient and controlled separation, ensuring the integrity of the sleeve for subsequent processing steps.

The method for opening both the first transversal seal and the second transverse seal of a used carton package may involves a mechanical process. A knife or similar cutting instrument is carefully inserted between the sealed surfaces of either the first transversal seal, the second transverse seal, or both. This insertion is precisely controlled to avoid damaging the carton material beyond the seal area. Once inserted, the knife acts to spatially separate the sealed surfaces from each other, effectively breaking the seal while preserving the integrity of the carton for its transformation into a sleeve. This process emphasizes precision and control in handling the sealed surfaces to ensure a clean separation conducive to the subsequent steps of sleeve production. The term "knife" in the context of separating sealed surfaces of a carton package encompasses all variations of instruments equipped with one or more blades suitable for this purpose. The blade may vary in size, shape, and sharpness depending on the specific requirements of the separation task. The surfaces of the blade or blades maybe coated to reduce friction during the cutting process or to reduce the buildup of polymer or adhesive residue on the surfaces during the cutting process.

The knife designed for separating the sealed surfaces of a carton package may feature a dual-blade configuration for enhanced functionality. The first blade, located on a first edge, is specifically engineered for penetrating the seal. Its sharpness and design allow for precise initial incision without damaging the surrounding carton material. Following penetration, a second blade on an adjacent edge, preferably perpendicular to the first edge, facilitates the separation process, slicing along the length of the seal to spatially separate the sealed surfaces efficiently. This dual-blade design ensures a seamless opening process, maintaining the integrity of the carton for subsequent sleeve production.

The method according to the present disclosure may involve using a laser knife to sever the sealed surfaces of the first transversal seal and/or the second transverse seal. This advanced tool precisely applies concentrated light energy to cut through the seal without physical contact, minimizing damage to surrounding materials. The laser knife's precision allows for exact severing along the seal line. Following the laser cutting, the sealed surfaces are spatially separated, effectively opening the seal while preserving the integrity of the carton for further processing into a sleeve. This process emphasizes accuracy and efficiency in separating the sealed surfaces. The term "laser knife" refers to a broad category of instruments utilizing various laser types and configurations to separate sealed surfaces. This includes CO2 lasers, fiber lasers, and diode lasers, among others, each offering distinct advantages in terms of wavelength, power output, and precision. These laser systems can be fine-tuned to cut through specific materials and seals with minimal thermal damage to adjacent areas, making them suitable for precision tasks like opening sealed carton packages. The laser knife may be mounted on a robotic arm or similar actuator to move the laser knife along the length of the seal to be opened. The direction of the laser knife may be perpendicular to the length of the seal to facilitate penetration of the laser into the depth of the seal. The direction of the laser knife may be adjustable during the operation. For example, the laser knife be oriented along a first direction during the initial penetration of the seal and then be adjusted to a second orientation for the remaining separation of the seal. The laser knife can be equipped with a first and a second laser, each oriented in different directions. This dual-laser configuration allows for versatile cutting angles, enabling more precise and efficient separation of sealed surfaces by targeting them from multiple directions. This arrangement enhances the ability to cut complex seal geometries or to perform sequential cuts with minimal adjustment, optimizing the process for opening seals while preserving the carton's integrity for further processing.

The method for opening the first transversal seal and/or the second transverse seal may involve inserting a heated pin between the sealed surfaces. This heated pin may then be moved along the length of the seal, effectively weakening or preferably severing the adhesive or polymer bond due to the applied heat in combination with the mechanical separation by the body of the pin. As the pin moves, it creates a path that allows for the spatial separation of the sealed surfaces from one another. This technique ensures precise control over the separation process, minimizing damage to the surrounding carton material and maintaining the integrity of the sleeve for further processing. The heated pin can be precisely controlled using a temperature regulation system, allowing for accurate adjustment of the pin's temperature to the optimal level required for weakening the seal's adhesive or polymer. Additionally, timing mechanisms ensure the pin is heated for the exact duration necessary, preventing overheating and damage to the carton material. This high precision in temperature and timing ensures efficient and controlled separation of the sealed surfaces. Technical solutions for transferring heat to the pin in a controlled fashion include resistive heating, where electrical resistance generates heat, and induction heating, which uses electromagnetic fields to heat metal objects. Both methods allow for precise temperature control through adjustable power settings and integrated feedback systems that monitor the pin's temperature in real time, ensuring consistent and accurate heat application tailored to the specific needs of separating the sealed surfaces.

The separation of sealed surfaces can be facilitated by applying external pulling forces to the outer surfaces of the sealed areas. Mechanical devices suitable for applying such pulling forces include vacuum suction cups and robotic grippers or a combination both. These devices can grip the carton package securely and apply a controlled force to peel or pull apart the sealed surfaces after they've been weakened, ensuring a clean and efficient separation process.

Optionally, the method may include the step of inserting mechanical devices, such as spreader bars or spacer tools, between the separated surfaces to prevent re-adhesion. These devices maintain a defined gap, ensuring the surfaces remain apart for subsequent processing or inspection. The adjustable nature of these mechanical devices allows for precise control over the separation distance, ensuring the integrity of the separated surfaces for further processing or inspection.

In the method according to the present disclosure, after forming the sleeve from a used carton package, there may be comprised an additional step for checking the integrity of the polymeric surfaces of the sleeve, particularly focusing on the areas of previously sealed surfaces. This integrity check ensures that each sealed surface retains a sufficient amount of heat-sealable polymer, crucial for enabling successful resealing when the package is reused. If the sleeve fails to meet this criterion (indicating that the polymeric surface isn't adequately prepared for resealing), it may be optionally discarded or sent for refurbishing, ensuring only sleeves fit for effective reuse proceed further. Suitable sensors and methods for checking the integrity of the sealed surfaces after separation include optical sensors and imaging systems that can analyze the uniformity and completeness of the polymeric layer on the sealed surfaces. These systems can detect variations in thickness, gaps, pin holes, or areas lacking sufficient polymer. Additionally, thermal imaging can assess the heat-sealable polymer's distribution by identifying thermal conductivity differences. Ultrasonic testing might be used to detect inconsistencies within the polymer layer that are not visible externally. These methods ensure a thorough evaluation of the sealed surfaces' readiness for resealing and, as a result, improve the quality of the packages produced by resealing the carton package sleeves according to the present disclosure.

The method may include a step of refurbishing at least a portion of the sealed surfaces. The step of refurbishing may be performed by applying additional adhesive or polymer at least in those areas of the seal that have detected as unfit for being used for resealing.

The method may include a step of opening the longitudinal seal of the used carton package. If the used carton package comprises further seals these may be opened as well. This step may be useful for allowing the transformation of the packaging material geometry into an open configuration, where the packaging material is brought into its original flat configuration, all internal surfaces are readily accessible, and no parts of the material overlap each other. Opening the longitudinal seal, and potentially all other seals, thus allows for thorough cleaning, inspection, or any additional processing required to repurpose the packaging material. The method ensures that the sleeve can be fully opened, maximizing accessibility to internal surfaces for complete hygiene, utilization, and quality assurance in subsequent applications. Similar to the opening of the transversal seals, the step of opening the longitudinal seal may include one of three technologies, mechanical cutting, laser technology, and thermal opening, or a combination thereof. Each method may be finetuned based on the specific requirements of the seal and desired processing speed. Following the opening of the seal, the sleeve is unfolded into an open configuration. This ensures all internal surfaces of the used carton package become accessible, utilizing mechanical arms, rollers, or other suitable devices designed for gentle expansion without damaging the sleeve, readying it for further processing or inspection.

The method may incorporate a cleaning step for the sleeve, in particular aimed at removing food residuals or other contaminants in manner that is suitable for achieving a level of cleanliness adequate for reusing the sleeve for food packaging. This can be achieved through various means, including applying cleaning agents, mechanical surface cleaning, and/or using ultrasonic baths to dislodge particles. Additionally, air jets or brushes might be employed to remove dry contaminants. This step ensures the sleeve, and in particular the inner surface of the sleeve, is hygienically safe and suitable for further use in packaging applications. Employing only a simple step of rinsing with water (which may be deemed adequate to prepare a used carton package for recycling)_ is generally insufficient for reliably removing food residuals and other contaminants to achieve the require hygiene levels prior to reusing the cleaned sleeve again for packaging applications.

The method may further comprise a step of detecting the type and degree of contamination on at least a portion of the surface. For detecting the type and degree of contamination on the sleeve, sensors such as optical sensors, including hyperspectral imaging systems, can be utilized. These sensors can identify specific contaminants by analyzing the spectral signature of the surfaces. Additionally, electronic noses or chemical sensors might be employed to detect and quantify organic residues or microbial contamination through volatile organic compound analysis. The integration of these sensors allows for targeted cleaning strategies, ensuring that the sleeve is cleaned according to the specific contamination present, optimizing the cleaning process efficiency and effectiveness. The step of detecting the type and degree of contamination on at least a portion of the surface may be performed before the step of removing the contamination. In this case, the intensity of the step of removing the contamination can be adjusted depending on the detected type and degree of contamination. Alternatively, the step of detecting the type and degree of contamination may be performed after the step of removing the contamination to control whether the removal of the contaminants has been effective.

The method may include a step for closing the poor opening. After closing the poor opening, the sleeve can be folded, filled, and then sealed again to ultimately form a filled carton package. Preferably, the poor opening is closed with a patch of material. The patch may be formed following the shape of the poor opening. The patch may have having similar barrier properties as the packaging material of the carton package. The patch of material can consist only of the barrier layer and not comprise a structural cardboard layer. The patch of material can then be sealed to the carton sleeve to form a watertight sleeve. Also, the poor opening maybe closed with a patch of material that is larger than the poor opening and is placed over the poor opening either on the inside or on the outside of the sleeve. In the overlapping region, the oversized patch may then be attached to the surface of the sleeve by adhesive, heat sealing, or ultrasonic sealing or the like. The choice of closing method depends on the material of the sleeve and the desired seal strength. Heat sealing, for instance, may involve a hot air nozzle, induction heating, or a heated bar that reactivates the polymeric layer for a secure seal. Adhesive application could use precision dispensers for glue or other bonding agents. Each method ensures the sleeve is properly sealed for subsequent use or processing.

The method may involve a step of identifying the type of used carton package. The step may be performed utilizing visual inspection systems, barcode readers, QR code readers, or RFID technology to determine the type, and/or size, and/or content of packages and subsequently its specific characteristics and material composition. The specific characteristics and material composition can be retrieved from a local information storage unit or alternatively from a cloud-based information storage unit through a wired or an online connection. Based on this identification, adjustments may be made to the method steps for opening the first transversal seal and the second transversal seal, and/or for folding the sleeve into a flat configuration. Further adjustments may be made to the step of identifying and removing an optional spout. Adjustments could include altering the temperature or duration of heat application for different seal materials or modifying the folding technique to accommodate varying package structures, ensuring optimal processing tailored to each package type.

The method may be adjusted to accommodate for used carton packages featuring at least one folded and/or attached flap when it initially is in its folded configuration. For example, the flap may be folded over and attached to the side panel of the package. The flap may comprise a portion of the first or the second transverse seal or the longitudinal seal. The step may include opening the attachment of the one or more folded flaps and then folding it back to properly expose the first or second transversal seal for opening. This might involve using mechanical devices and/or thermal techniques to detach and reposition the flap, depending on the type of attachment. This step will ensure the seal is accessible for the subsequent opening process.

The method may include a step of folding the sleeve into a flat configuration after the sleeve is formed from the used carton package. This step further refines the process of preparing the sleeve for storage, transportation, or further processing. Initially, the sleeve, formed from the used carton package, may undergo careful straightening and alignment. This ensures that all edges and creases are properly oriented for a flawless transformation into the flat configuration. Otherwise, the transformation could lead to undesirable new crease lines. Robotic actuators might manually adjust the sleeve, or specialized alignment tools could be employed to achieve precision. Following alignment, the sleeve is subjected to uniform pressure, possibly through the use of press plates or rollers, ensuring the sleeve attains a uniformly flat state. Optionally, to guarantee the durability of refolded creases, crease reinforcement might be applied. This could involve the use of creasing machines that not only define but also strengthen the folds, ensuring they remain intact through subsequent handling or processing.

The method may include adding the flattened sleeve to a stack of other sleeves. This can be performed for example with automated equipment like robotic arms that carefully place each sleeve atop the stack, ensuring alignment and neatness. The stacking process might also involve sensors to verify the sleeve's orientation before placement, minimizing errors and maximizing space efficiency. This systematic stacking facilitates easy storage and transport while preparing the sleeves for further processing or recycling, ensuring they are orderly and accessible for the next steps in their repurposing. The stack of sleeves may optionally be placed into a cassette for transport and insertion into a filling machine for producing filled sealed packages from the sleeves.

Another aspect of the present invention is to provide an apparatus for producing a carton packaging sleeve from a used carton package. The apparatus designed for producing a carton packaging sleeve from a used carton package may be configured to execute some or all steps outlined in the preceding claims efficiently. This apparatus encompasses mechanisms for identifying the type of carton package, opening seals, cleaning the sleeve, and folding it into a flat configuration. It may include a combination of sensors for identification and integrity checks, heating elements and/or lasers for seal opening, washing units for cleaning, and mechanical arms or rollers for folding. The apparatus may be configured to be placed at the point of collection such as in a supermarket where customers can return used carton packages using the apparatus. In this scenario, the apparatus is designed to have a small form factor and to have a user interface that allows easy disposal of used carton packages, potentially in combination with reimbursing the customer according to a deposit scheme. Alternatively, the apparatus may be configured to process high volumes of used carton packages in a factory setting.

In another aspect of the present disclosure, a carton packaging sleeve obtainable from a used carton package according to the method of the present disclosure is provided. The carton packaging sleeve according to the present invention is easily distinguishable from virgin packaging sleeves in that the packaging material exhibits, at least to some extent, signs of prior use. This sleeve is unique in that it originates from material that has previously served as a carton package. The sleeve may incorporate a reclosed pour opening for added functionality. Additionally, it may include at least one refurbished seal surface, which is integral to either the first or second transverse seal or the longitudinal seal, ensuring a secure closure after resealing. The sleeve could also have at least one reinforced crease line, enhancing its structural integrity and facilitating its reuse or repurposing. This approach ensures the sustainability of the packaging material and the innovative reuse of materials.

### EXAMPLARY MODES FOR CARRYING OUT THE INVENTION

Number 1 indicates as a whole a used carton package. In particular, the used carton package was used to contain a pourable food product, such as pasteurized milk or fruit juice.

The used carton package is formed of a packaging material has a multilayer structure. In particular, the packaging material comprises a layer of fibrous material, normally paper, covered on both sides with respective layers of heat-seal plastic material, e.g. polyethylene.

Preferably, the packaging material also comprises a layer of gas- and light-barrier material, e.g. aluminum foil or ethylene vinyl alcohol (EVOH) film, and at least a first and a second layer of heat-seal plastic material. The layer of gas- and light-barrier material is superimposed on the first layer of heat-seal plastic material, and is in turn covered with the second layer of heat-seal plastic material. The second layer of heat-seal plastic material forms the inner face of package 1 eventually contacting the food product.

The package 1 includes a top wall 2, a bottom wall 3, and a side wall 4 between the top wall 2 and bottom wall 3. The top wall 2 and the bottom wall 3 may be parallel or inclined to one another. The side wall may include at least one wall, preferably a plurality of walls (e.g. four walls), extending from the top wall 2 to the bottom wall 3.

The package 1 includes a longitudinal seal 5C running along the side wall 4. The package 1 includes a first transversal seal 5 running across the top wall 2. The package 1 includes a second transversal seal (not visible in the drawing) running across the bottom wall 3.

The package 1 may, optionally, include an opening in any one of the top wall 2, bottom wall 3, or side wall 4 for accessing the inside volume of the used carton package 1. The opening may extend on more than one wall, e.g. may extend in part on the top wall 2 and in part on the side wall 4.

The package 1 may, optionally, include a spout 6 associated with the opening. The spout 6 includes a base frame coupled to the package 1 (in the example shown, to the top wall 2 and side wall 4), and a collar integrally formed with the base frame. Optionally, the spout 6 may also include a lid removably coupled to the collar to open and close said opening.

The present disclosure regards a method for producing a carton packaging sleeve 8 from the used carton package 1.

The method may comprise the steps of detecting the presence of the optional spout 6 and removing the optional spout 6 in case its presence has been detected. In particular, the optional spout 6 may be detected by a sensor, such as a camera, or by a human operator. The removal of the optional spout may be performed through a machine (which clamps the package 1 and the spout 6 and pulls the spout 6 away), or by a human operator.

The method comprises a step of opening the first transversal seal 5A and/or the second transversal seal 5B to obtain a sleeve 8. It is noted that the longitudinal sleeve 8, preferably, remains integer.

Each one of the first transversal seal 5A and second transverse seal 5B is defined by respective sealed surfaces, which are originally sealed to one another.

In one or more embodiments, the step of opening the first transversal seal 5A and the second transverse seal 5B comprises the steps of applying heat to the first transversal seal 5A and/or the second transverse seal 5B, and spatially separating the sealed surfaces from one another. Application of heat may be performed by induction heating and/or ultrasonic heating and/or dielectric heating.

In one or more embodiments, the step of opening the first transversal seal 5A and the second transverse seal 5B comprises the steps of inserting a knife 10 between the sealed surfaces forming the first transversal seal 5A and/or between the sealed surfaces forming the second transverse seal 5B, and spatially separating the sealed surfaces from one another. Optionally, the knife 10 may be heated, or hot, while being inserted. In particular, a couple of hot air nozzles 11 may be arranged at opposite sides of the sleeve 8, to heat the first transversal seal 5A and the second transversal seal 5B while the knife 10 is inserted therebetween.

In one or more embodiments, the step of opening the first transversal seal 5A and the second transverse seal 5B comprises the us of suction cups or grippers 12 that pull the seal surfaces apart (preferably, after having been softened).

In one or more embodiments, the step of opening the first transversal seal 5A and the second transverse seal 5B comprises the steps of severing the sealed surfaces forming the first transversal seal 5A and/or the second transverse seal 5B with a laser knife, and spatially separating the sealed surfaces from one another. Severing may be obtained by clamping the sealed surfaces and pulling them away from one another.

In one or more embodiments, the step of opening the first transversal seal 5A and the second transverse seal 5B comprises the steps of inserting a heated pin 9 between the sealed surfaces forming the first transversal seal 5A and/or second transverse seal 5B, moving the pin 9 along the first and/or the second transverse seal, spatially separating the sealed surfaces from one another.

It is noted that said ways of performing the step of opening the first transversal seal 5A and the second transverse seal 5B may be provided in alternative or in combination with one another. In particular, it is possible to open the first transversal seal in one way and the second transversal seal in another way.

In one or more embodiments, the method further comprises the steps of: checking the integrity of the sleeve 8; conditionally (or optionally) discarding the sleeve 8 in case the integrity check is not passed. It is noted that integrity of the sleeve means whether the sleeve presents defects such as tears, and/or delamination, sufficient barrier properties, and/or stain. In particular, the sleeve may be considered not integer in case it presents a defect such as to compromise liquid tightness. In this context, the step of checking the integrity of the sleeve 8 may include detecting the presence of defects (or damages) on the sleeve 8.

The integrity checking may be performed by visual inspection (through a camera or directly by an operator) and/or by leak test. In particular, it is provided that in case the sleeve 8 does not pass a leak test, e.g. due to the longitudinal seal 5C not being tightly sealed, then the sleeve 8 is discarded.

In one or more embodiments, the method further comprises the steps of opening the longitudinal seal 5C; bringing the sleeve 8 into an open configuration in which all internal surfaces of the used carton package are accessible; reclosing the opened longitudinal seal to obtain the carton packaging sleeve.

In one or more embodiments, the method further comprises the step of cleaning the sleeve 8 to remove food residuals or other contaminants. Cleaning may be performed by rinsing with detergent. In particular, the step of cleaning the sleeve may comprise a step of applying cleaning agents, mechanical surface cleaning, using ultrasonic baths to dislodge particles, or a combination of at least two of these steps. Preferably, the step of cleaning comprises a combination of at least two of the aforementioned steps (for example, the step of cleaning may comprise:
- applying cleaning agents and mechanical surface cleaning; or
- applying cleaning agents and using ultrasonic baths to dislodge particles;
- mechanical surface cleaning and using ultrasonic baths to dislodge particles; or
- applying cleaning agents, and mechanical surface cleaning, and using ultrasonic baths to dislodge particles.

In this respect, it is noted that the level of cleaning mist be sufficient to allow for use as packaging sleeve. Simple rinsing, alone, may be not sufficient.

In one or more embodiments, the method further comprises the step of closing the opening. The opening may be closed by applying a patch 13 onto the opening and attaching it to the packaging material (such as by sealing or gluing).

In one or more embodiments, the method further comprises the step of identifying the type of package. Type of package may be defined by shape and/or volume of the package. Type of package may be identified by reading a QR code on the package. Alternatively, type of package may be identified by scanning the package through a 3D camera. Optionally, the method further comprises the step of adjusting the step of opening the first transversal seal 5A and the second transversal seal 5B, and/or the step of folding the sleeve 8 into a flat configuration, in dependence of the identified type of package.

Preferably, the used carton package is initially in a folded configuration and comprises at least one folded flap 7. The folded flap 7 is a portion of the top wall 2 or the bottom wall 3 which is either
i) folded over an edge between one of the top wall 2 or bottom wall 3 and the side wall 4, and attached to the side wall 4, or
ii) folded back onto the top wall 2 or bottom wall 3 along an edge between one of the top wall 2 or bottom wall 3 and the side wall 4, and attached to the top wall 2 or bottom wall 3.

The folded flap 7 comprises a portion of the first transversal seal 5A or the second transversal seal 5B.

The method may further comprise the steps of opening the attachment of the folded flap 7 and folding the folded flap 7 back to bring the first or second transversal seal into a configuration for being opened.

In one or more embodiments, the method further comprises the step of folding the sleeve 8 into a flat configuration. In particular, in case the longitudinal seal is not opened, the sleeve 8 may be flattened by pressing it so as to obtain a pressed sleeve 8. In case the longitudinal seal is opened, the sleeve 8 may be flattened by unrolling it so to obtain a carton blank.

In one or more embodiments, the method further comprises the step of adding the sleeve 8 to a stack 14 of other sleeves.

The present disclosure also provides an apparatus for producing a carton packaging sleeve 8 from a used carton package 1, wherein the apparatus is operable to perform the method according to any aspect of the present disclosure. In particular, the apparatus is designed to execute the method according to any aspect of the present disclosure.

## Claims

1. Method for producing a carton packaging sleeve (8) from a used carton package (1),
whereby the used carton package (1) has
- a top wall (2), a bottom wall (3), and a side wall (4) between the top wall (2) and bottom wall (3);
- a longitudinal seal (5C) running along the side wall (4);
- a first transversal seal (5A) running across the top wall (2), and;
- a second transversal seal (5B) running across the bottom wall (3);
- an opening in any one of the top wall (2), bottom wall (3), or side wall (4) for accessing the inside volume of the used carton package (1);
- optionally, a spout (6) associated with the opening;
**characterized in that**
the method comprises the steps of
- detecting the presence of the optional spout (6) and removing the optional spout (6) in case its presence has been detected;
- opening the first transversal seal (5A) and/or the second transversal seal (5B) to obtain the sleeve (8).

2. The method according to claim 1, wherein each one of the first transversal seal (5A) and/or second transverse seal (5B) is defined by respective sealed surfaces, which are originally sealed to one another,
wherein the step of opening the first transversal seal (5A) and/or the second transverse seal (5B) comprises the steps of
• applying heat to the first transversal seal (5A) and/or the second transverse seal (5B),
• spatially separating the sealed surfaces of the first and/or second transverse seal from one another.

3. The method according to claim 1 or 2, wherein each one of the first transversal seal (5A) and second transverse seal (5B) is defined by respective sealed surfaces, which are originally sealed to one another,
wherein the step of opening the first transversal seal (5A) and the second transverse seal (5B) comprises the steps of
• inserting a knife between the sealed surfaces forming the first transversal seal (5A) and/or between the sealed surfaces forming the second transverse seal (5B)
• spatially separating the sealed surfaces from one another.

4. The method according to any one of the preceding claims, wherein each one of the first transversal seal (5A) and second transverse seal is defined by respective sealed surfaces, which are originally sealed to one another,
wherein the step of opening the first transversal seal (5A) and/or the second transverse seal (5B) comprises the steps of
• severing the sealed surfaces forming the first transversal seal (5A) and/or the second transverse seal (5B) with a laser knife,
• spatially separating the sealed surfaces from one another.

5. The method according to any one of the preceding claims, wherein each one of the first transversal seal (5A) and second transverse seal (5B) is defined by respective sealed surfaces, which are originally sealed to one another,
wherein the step of opening the first transversal seal (5A) and the second transverse seal (5B) comprises the steps of
• inserting a heated pin (9) between the sealed surfaces forming the first transversal seal (5A) and/or second transverse seal (5B)
• moving the pin (9) along the first and/or the second transverse seal
• spatially separating the sealed surfaces from one another.

6. The method according to any one of the preceding claims, further comprising the steps of
• checking the integrity of the sleeve (8)
• conditionally discarding the sleeve (8) in case the integrity check is not passed.

7. The method according to any one of the preceding claims, further comprising the steps of:
• opening the longitudinal seal (5C);
• bringing the sleeve (8) into an open configuration in which all internal surfaces of the used carton package are accessible;
• reclosing the opened longitudinal seal to obtain the carton packaging sleeve.

8. The method according to any one of the preceding claims, further comprising the step of
• cleaning the sleeve (8) to remove food residuals or other contaminants, the step of cleaning the sleeve comprising a step of applying cleaning agents, mechanical surface cleaning, using ultrasonic baths to dislodge particles, or a combination of at least two of these steps.

9. The method according to any one of the preceding claims, further comprising the step of
• closing the pour opening of the sleeve (8).

10. The method according to any one of the preceding claims, further comprising the steps of
• identifying the type and/or size of the used carton package;
• adjusting the step of opening the first transversal seal (5A) and/or
the second transversal seal (5B), and/or the step of folding the sleeve (8) into a flat configuration, depending on the identified type and/or size of package.

11. The method according to any one of the preceding claims,
wherein the used carton package is initially in a folded configuration and comprises at least one folded flap (7),
the folded flap (7) being a portion of the top wall (2) or the bottom wall (3) which is either
- folded over an edge between one of the top wall (2) or bottom wall (3) and the side wall (4), and attached to the side wall (4),
or
- folded back onto the top wall (2) or bottom wall (3) along an edge between one of the top wall (2) or bottom wall (3) and the side wall (4), and attached to the top wall (2) or bottom wall (3);
the folded flap (7) comprising a portion of the first transversal seal (5A) or the second transversal seal (5B),
and wherein the method further comprises the steps of
• opening the attachment of the folded flap (7),
• folding the folded flap (7) back to bring the first or second transversal seal into a configuration for being opened.

12. The method according to any one of the preceding claims, further comprising the step of folding the sleeve (8) into a flat configuration.

13. The method according to claim 12, further comprising the step of adding the sleeve (8) to a stack (14) of other sleeves.

14. An apparatus for producing a carton packaging sleeve from a used carton package (1), wherein the apparatus is operable to perform the method according to any one of the preceding claims.

15. A carton packaging sleeve (8) obtainable from a used carton package (1) according to the method of any of claims 1 to 13 where the carton package (1) is **characterized by** having at least one of the following features:
• made primarily from packaging material that has been previously used in another carton package;
• a reclosed pour opening;
• at least one refurbished seal surface forming part of the first transversal seal (5A) or second transverse seal (5B) or the longitudinal seal (5C);
• at least one reinforced crease line.
